# EUROPEAN PATENT APPLICATION

(11) **EP 4 851 266 A1**
(43) Date of publication of application: **09.12.2026**
(21) Application number: 25768081.9
(22) Date of filing: 05.02.2025
(51) Int. Cl.: C10M 169/04, C09K 5/04, C10M 105/32, C10M 137/04, C10M 145/14, C10N 30/02, C10N 30/06, C10N 40/30

(54) **REFRIGERATING MACHINE OIL AND REFRIGERATING DEVICE**

(30) Priority: 05.03.2024 JP 2024032847
(71) Applicant: Mitsubishi Heavy Industries Thermal Systems, Ltd., Tokyo 100-8332 (JP)
(72) Inventor: HORAGUCHI, Norihisa, Tokyo 100-8332 (JP); ISHIMOTO, Takao, Tokyo 100-8332 (JP); SUZUKI, Toru, Tokyo 100-8332 (JP); IHARA, Kento, Tokyo 100-8332 (JP); SHIMAYA, Hirofumi, Tokyo 100-8332 (JP); KOBAYASHI, Yoshiki, Tokyo 100-8332 (JP)
(74) Representative: Cabinet Beau de Loménie
(86) International application number: PCT/JP2025/003682
(87) International publication number: WO 2025/187298

(57) **Abstract**

An object is to achieve, in a refrigerating machine oil and a refrigerating device, both suppression of viscous resistance loss at the time of compressor start-up (at normal temperature) and improvement in oil film load-carrying capacity during operation (at high temperature). A refrigerating machine oil according to the present disclosure is a refrigerating machine oil for a refrigerating device charged with propane as a refrigerant, the refrigerating machine oil including an ester-based base oil having a viscosity grade of ISO VG32 or less, and a viscosity index improver containing a polymethacrylate having an alkyl substituent having 1 to 18 carbon atoms, in which a concentration of the polymethacrylate is 0.6 wt% or more and 6 wt% or less.

## Description

### Technical Field

The present disclosure relates to a refrigerating machine oil and a refrigerating device.

### Background Art

A refrigerating device is configured with at least a compressor, a condenser, an expansion valve, and an evaporator. In the refrigerating device, the respective components are connected as a closed circuit by refrigerant piping. The refrigerating device has a structure in which a mixed liquid in which a refrigerant and a refrigerating machine oil are miscible circulates in a sealed system.

In a case where a new refrigerant is adopted, a compressor corresponding to the new refrigerant is developed. In the development of the compressor, reduction of wear loss and improvement of wear characteristics for a sliding part are urgent issues, and it is required to select a refrigerating machine oil and an oil additive suitable for each refrigerant.

PTL 1 discloses an invention in which an antiwear agent (TBP) is added to a refrigerating machine oil to suppress wear of a sliding part even in a case where an oil film load-carrying capacity is reduced due to a high temperature.

### Citation List

### Patent Literature

[PTL 1] Japanese Unexamined Patent Application Publication No. 2020-158566

### Summary of Invention

### Technical Problem

R290 is a natural refrigerant and has a very low GWP. On the other hand, R290 has high solubility in a refrigerating machine oil. Therefore, in the refrigerating device using R290 as the refrigerant, there is a concern that abnormal wear of sliding parts may occur due to a decrease in viscosity of the refrigerating machine oil.

In order to suppress this, the viscosity grade of the base oil used in the refrigerating machine oil may be increased. However, when the viscosity grade of the base oil is increased, the kinematic viscosity of the refrigerating machine oil at the time of compressor start-up of the refrigerating device is increased by that amount, and thus there is a problem that the friction loss due to viscous resistance is increased.

In a case where R290 is used as the refrigerant, there is a concern that the antiwear effect may be insufficient only by adding the antiwear agent described in PTL 1 to the refrigerating machine oil.

The present disclosure has been made in view of such circumstances, and an object of the present disclosure is to achieve both suppression of a viscous resistance loss during compressor start-up (normal temperature) and improvement of an oil film load-carrying capacity during operation (high temperature) in a refrigerating machine oil and a refrigerating device.

### Solution to Problem

In order to solve the above-described problems, the refrigerating machine oil and the refrigerating device of the present disclosure adopt the following means.

The present disclosure provides a refrigerating machine oil for a refrigerating device charged with propane as a refrigerant, the refrigerating machine oil including: an ester-based base oil having a viscosity grade of ISO VG32 or less; and a viscosity index improver containing a polymethacrylate having an alkyl substituent having 1 to 18 carbon atoms, in which a concentration of the polymethacrylate is 0.6 wt% or more and 6 wt% or less.

The present disclosure provides a refrigerating device including a refrigerant circulation circuit in which a compressor, a condenser, an expansion valve, and an evaporator are connected by main piping to circulate a refrigerant, in which the compressor includes a refrigerating machine oil supply mechanism that supplies a refrigerating machine oil to a sliding part, the refrigerating machine oil accommodated in the refrigerating machine oil supply mechanism includes an ester-based base oil having a viscosity grade of ISO VG32 or less and a viscosity index improver containing a polymethacrylate having an alkyl substituent having 1 to 18 carbon atoms, and a concentration of the polymethacrylate is 0.6 wt% or more and 6 wt% or less, and the refrigerant circulation circuit is charged with propane as the refrigerant.

### Advantageous Effects of Invention

According to the present disclosure, it is possible to realize a refrigerating machine oil and a refrigerating device including the refrigerating machine oil, in which both suppression of a viscous resistance loss during compressor start-up (normal temperature) and improvement of an oil film load-carrying capacity during operation (high temperature) can be achieved by containing, in an ester-based base oil, a viscosity index improver containing a polymethacrylate having an alkyl substituent having 1 to 18 carbon atoms.

### Brief Description of Drawings

FIG. 1 is a block diagram of a refrigerating device.
FIG. 2 is a longitudinal sectional view showing a scroll compressor.
FIG. 3 is a plan view showing an Oldham link and an upper bearing of FIG. 2.
FIG. 4 is a longitudinal sectional view cut at a position of a key of the Oldham link of FIG. 3.
FIG. 5 is a diagram showing evaluation results of a viscosity index improver.
FIG. 6 is a diagram showing a two-layer separation temperature of a mixture of a refrigerating machine oil containing a viscosity index improver and a refrigerant.
FIG. 7 is a graph summarizing an influence of the viscosity index improver on a base oil.

### Description of Embodiments

Hereinafter, an embodiment of a refrigerating machine oil and a refrigerating device according to the present disclosure will be described with reference to the drawings.

### (Refrigerating Machine Oil)

The refrigerating machine oil contains a base oil and a viscosity index improver. The refrigerating machine oil may contain an antiwear agent. The refrigerating machine oil may contain an oiliness agent, an extreme pressure agent, an antioxidant, an acid scavenger, a defoaming agent, a leak detection agent, and the like. A pour point of the refrigerating machine oil is -45°C or lower.

The base oil is an ester-based synthetic lubricating oil (ester-based base oil). The ester-based base oil may be, for example, a polyol ester, a polyvinyl ether, a polyalkylene glycol, an alkylbenzene, a mineral oil, or the like. A viscosity grade of the base oil is ISO VG32 or less. The viscosity grade of the base oil may be ISO VG22 or more.

The viscosity grade is a grade of viscosity of lubricating oils defined by the International Organization for Standardization (ISO). In the viscosity grade, the higher the numerical value is, the higher the viscosity is. In the viscosity grade, a kinematic viscosity range is determined for each numerical value at the end, and the numerical value indicates a center value of the kinematic viscosity (mm²/s). A kinematic viscosity range of ISO VG32 at 40°C is 28.8 mm²/s or more and 35.2 mm²/s or less. A kinematic viscosity range of ISO VG22 at 40°C is 19.8 mm²/s or more and 24.2 mm²/s or less.

The viscosity index improver has an action of reducing a change in viscosity of the base oil with a change in temperature.

The viscosity index improver has a structural unit represented by Formula (I).

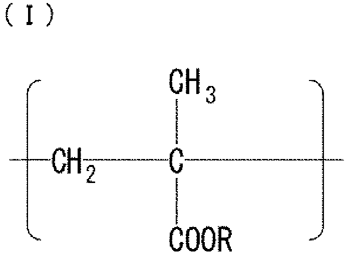

R in Formula (I) is an alkyl substituent having 1 to 18 carbon atoms.

The viscosity index improver contains a polymethacrylate ester (PMA). A molecular weight of the polymethacrylate ester is 35,000 or less, and preferably about 30,000. In the viscosity index improver, the PMA may be diluted with a solvent. A mineral oil is suitable as the solvent. PMA: solvent may be 60:40 (weight ratio). The viscosity index improver may be, for example, ACRUBE A-1061 manufactured by Sanyo Chemical Industries, Ltd.

A concentration of the polymethacrylate ester in the refrigerating machine oil is 0.6 wt% or more and 6 wt% or less. In a case where the base oil having a viscosity grade of ISO VG32 is used, the concentration of the polymethacrylate ester may be 0.6 wt% or more and 3 wt% or less. In a case where a base oil having a viscosity grade of ISO VG22 is used, the concentration of the polymethacrylate ester may be 3 wt% or more and 6 wt% or less.

By blending the viscosity index improver containing the polymethacrylate ester in the base oil, a viscosity index (VI) can be improved. The "viscosity index" is a numerical value representing a degree of change in viscosity due to a temperature. The viscosity index is expressed as an index with a reference oil as a reference from kinematic viscosities at 40°C and 100°C, and the higher the viscosity index is, the smaller the change in viscosity is. A viscosity index of the refrigerating machine oil using the base oil having a viscosity grade of ISO VG32 at 40°C may be from 186 ± 10% to 206 ± 10%. A viscosity index of the refrigerating machine oil using the base oil having a viscosity grade of ISO VG22 at 40°C may be from 167 ± 10% to 184 ± 10%. The above-described viscosity index means a viscosity index measured in accordance with JIS K2283:2000.

In general, the viscosity of the base oil decreases as the temperature increases. By improving the viscosity index of the refrigerating machine oil, a difference in fluid viscous resistance between the time of start-up and the time of operation can be reduced. Even in a case where the viscosity grade is the same, the oil film load-carrying capacity is high in a high temperature range in a case where the viscosity index is high. Therefore, start-up at a low viscosity can be achieved. Even in a case where the viscosity grade of the base oil is lowered, by causing the refrigerating machine oil to contain the viscosity index improver containing the polymethacrylate ester, the oil film load-carrying capacity in the high temperature range becomes higher than that of a refrigerating machine oil to which the viscosity index improver containing the polymethacrylate ester is not added.

The antiwear agent is tributyl phosphate (TBP). The concentration of the antiwear agent in the refrigerating machine oil is 1 wt% or more and 5 wt% or less, and preferably 1 wt% or more and 3 wt% or less. In a case where the TBP is contained in an amount of 1 wt% or more, the wear resistance of the refrigerating machine oil is significantly improved. In a case where the concentration of the TBP is 1 wt% or more, the wear resistance does not significantly fluctuate even in a case where the concentration is increased thereafter. Therefore, the upper limit of the TBP concentration may be set to 5 wt% or less, and preferably 3 wt% or less.

The refrigerating machine oil according to the present embodiment is suitable for use in a refrigerating device charged with propane (R290 refrigerant) as a refrigerant. The refrigerant is mixed into the refrigerating machine oil due to the operation of the refrigerating device. The refrigerating machine oil according to the present embodiment is miscible with the R290 refrigerant in the operating temperature range of the refrigerating device.

### (Refrigerating Device)

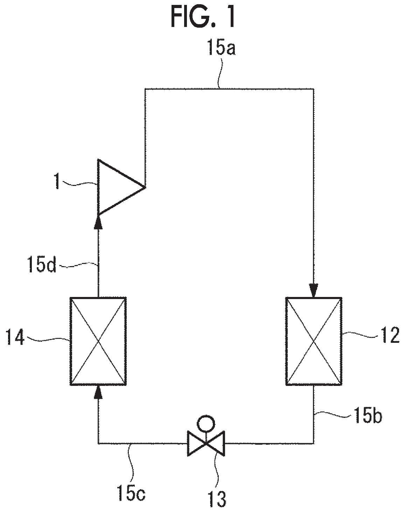

The refrigerating machine oil according to the present embodiment is suitable for use in, for example, a household room air conditioner, a commercial air conditioner, a chiller, a car air conditioner, a refrigerated/freezer showcase, a heat pump for hot water supply, and the like. FIG. 1 illustrates a block diagram of a refrigerating device using the refrigerating machine oil according to the present embodiment.

The refrigerating device in FIG. 1 includes a refrigerant circulation circuit having a compressor 1, a condenser 12, an expansion valve 13, and an evaporator 14. The refrigerant circulation circuit is a closed circuit in which the compressor 1, the condenser 12, the expansion valve 13, and the evaporator 14 are connected via pipes 15a to 15d through which a refrigerant is circulated and transported.

The refrigerant circulation circuit is charged with a refrigerant. The refrigerant is propane (R290). The charge amount of the refrigerant in the refrigerating device is 300 g or more, and preferably 500 g or more.

The refrigerating machine oil is supplied to the compressor. The refrigerating machine oil is selected from refrigerating machine oils including an ester-based base oil having a viscosity grade of ISO VG32 or less and a viscosity index improver containing a polymethacrylate having an alkyl substituent having 1 to 18 carbon atoms, in which a concentration of the polymethacrylate is 0.6 wt% or more and 6 wt% or less.

In the refrigerating device, the condenser 12 condenses/liquefies a high-temperature and high-pressure refrigerant gas to release heat, the expansion valve 13 adiabatically expands the high-temperature and high-pressure liquid refrigerant that has passed through the condenser 12 to reduce the pressure, the evaporator 14 evaporates/vaporizes the low-temperature and low-pressure liquid refrigerant that has passed through the expansion valve 13 to absorb heat, and the compressor 1 adiabatically compresses the low-temperature and low-pressure refrigerant gas that has passed through the evaporator 14. The high-temperature and high-pressure refrigerant gas that has passed through the compressor 1 is supplied to the condenser 12. By circulating the refrigerant as a heat transfer medium in this closed system, the movement of heat from the evaporator 14 to the condenser 12 is realized.

The refrigerating machine oil supplied to the compressor 1 circulates through the refrigerant circulation circuit including the evaporator 14, the expansion valve 13, and the condenser 12 in a state of being mixed with the refrigerant, and returns to the compressor 1. The refrigerating machine oil supplied to the refrigerating device is used, in a state of being sealed in the system together with the refrigerant, generally without being replaced during a period in which the refrigerating device is used.

### (Compressor)

The compressor 1 of the refrigerating device may be a scroll compressor or a rotary compressor. The refrigerating machine oil according to the present embodiment is particularly suitable for use in a scroll compressor including an Oldham link.

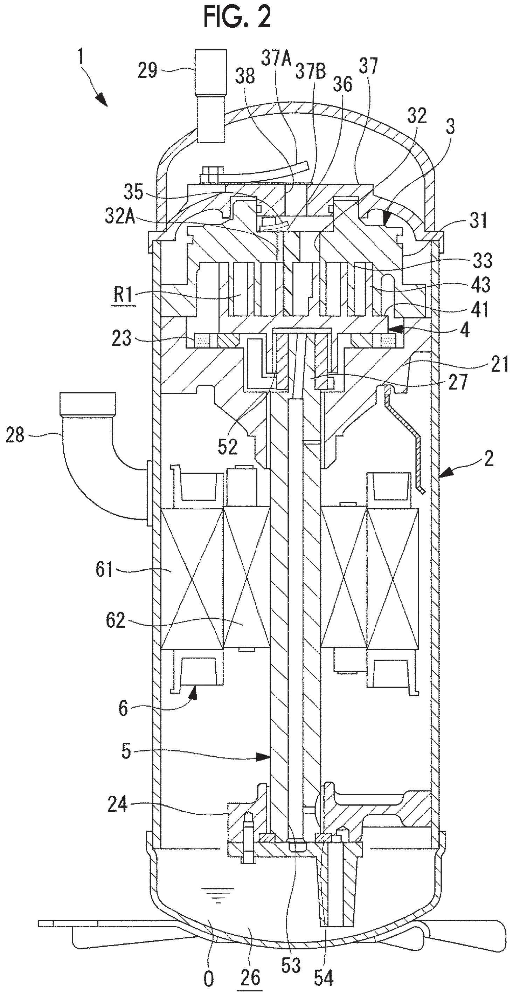

FIG. 2 is a longitudinal sectional view of a scroll compressor to which the refrigerating machine oil is applied.

The scroll compressor (scroll fluid machine) 1 includes a fixed scroll 3 and an orbiting scroll 4 that revolves around the fixed scroll 3 in the housing 2.

The fixed scroll 3 is fixed to the housing 2 via an upper bearing 21, and includes a wall body 33 having a scroll shape erected on an end plate 31. The orbiting scroll 4 includes a wall body 43 having a scroll shape erected on an end plate 41. The wall body 33 of the fixed scroll 3 and the wall body 43 of the orbiting scroll 4 have substantially the same shape. The orbiting scroll 4 is rotated by 180° with respect to the fixed scroll 3 to cause the wall bodies 33 and 43 to mesh with each other, so that a plurality of sealed compression spaces R1 are formed.

The orbiting scroll 4 undergoes a revolving motion with respect to the fixed scroll 3 in a state where the rotation of the orbiting scroll 4 is restricted by an Oldham link 23.

The orbiting scroll 4 is rotated by a motor 6 that drives the orbiting scroll 4. A rotating shaft 5 to be rotated by the motor 6 is connected to the orbiting scroll 4 via a crank pin 27. The crank pin 27 is eccentrically provided with respect to a central axis of the rotating shaft 5. The crank pin 27 is rotatably connected to a boss formed on a back surface (lower surface in the drawing) of the end plate 41 of the orbiting scroll 4 via a drive bush and a drive bearing 52. The rotating shaft 5 is rotatably supported by the upper bearing 21 and a lower bearing 24 fixed to the housing 2.

A storage region 26 for storing the refrigerating machine oil is provided in a lower portion of the housing 2. The refrigerating machine oil is pumped up by a pump 54 provided at a lower end of the rotating shaft 5 through an oil supply path 53 inside the rotating shaft 5, and is supplied to sliding parts such as the lower bearing 24, the upper bearing 21, the drive bearing 52 provided around the crank pin 27, the orbiting scroll 4, and the Oldham link 23. In the present embodiment, the storage region 26, the pump 54, and the oil supply path 53 are collectively referred to as a refrigerating machine oil supply mechanism.

The housing 2 is provided with a suction pipe 28 that sucks in low-pressure gaseous refrigerant, and a discharge pipe 29 that discharges high-pressure gaseous refrigerant after compression. The suction pipe 28 and the discharge pipe 29 are connected to a refrigerant circulation circuit of a refrigerating device (not shown).

The scroll compressor 1 operates as follows.

When a driving current is supplied to a stator 61 of the motor 6 from a power supply not shown, a rotor 62 of the motor 6 rotates, and driving force is output to the rotating shaft 5.

When the rotating shaft 5 rotates, driving force is transmitted to the orbiting scroll 4 via the crank pin 27 provided at an upper end of the rotating shaft 5 eccentrically with respect to the central axis of the rotating shaft 5 in one outward direction (eccentric direction) in a radial direction. Accordingly, the orbiting scroll 4 revolves with respect to the fixed scroll 3 while being prevented from rotating due to action of the Oldham link 23.

The refrigerant that has flowed in from the suction pipe 28 is suctioned between the orbiting scroll 4 and the fixed scroll 3 by the orbiting of the orbiting scroll 4. Then, as the orbiting scroll 4 orbits, the volume of the compression spaces R1 between the orbiting scroll 4 and the fixed scroll 3 decreases, so that the refrigerant in the compression spaces R1 is compressed.

The compressed refrigerant is discharged to the refrigerant circulation circuit through the discharge pipe 29 after passing through a discharge port 32 of the fixed scroll 3 and a discharge port 38 of a discharge cover 37. A multiport 32A is formed in the fixed scroll 3, and the multiport 32A is provided with a reed valve 36 attached to the end plate 31 of the fixed scroll 3 via a retainer 35. The discharge port 38 of the discharge cover 37 is also provided with a reed valve 37B attached to the discharge cover 37 via a retainer 37A. When the pressure of the compressed refrigerant reaches a predetermined value, the refrigerant that pushes and opens the reed valves 36 and 37B is discharged to a condenser side of the refrigerant circulation circuit.

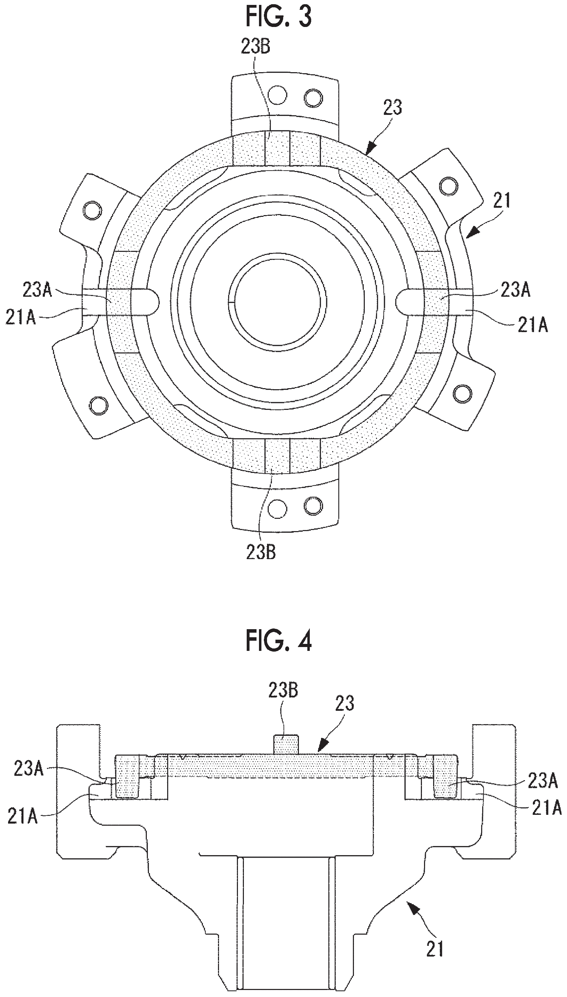

FIG. 3 shows the Oldham link 23 shown in FIG. 2. The Oldham link 23 is provided above the upper bearing 21. As shown in FIG. 2, the Oldham link 23 is provided on a back surface side of the end plate 41 of the orbiting scroll 4.

As shown in FIG. 3, the Oldham link 23 has a substantially ring shape in the case of a plan view. In the case of a plan view as shown in FIG. 3, keys 23A protruding downward (upper bearing 21 side) are provided on both right and left sides, namely, at the positions of 3 o'clock and 9 o'clock. In the case of a plan view as shown in FIG. 3, keys 23B protruding upward (orbiting scroll 4 side) are provided on both upper and lower sides, namely, at the positions of 6 o'clock and 12 o'clock. Namely, a direction in which two keys 23A are provided and a direction in which two keys 23B are provided are provided to be orthogonal to each other. As shown in FIG. 4, each of the keys 23A protruding downward is inserted into a key groove 21A formed in the upper bearing 21. Each of the keys 23B protruding upward is, although not shown, inserted into a key groove formed in the end plate 41 of the orbiting scroll 4.

The upper bearing 21 and the orbiting scroll 4 may be made of a material different from that of the Oldham link 23. When the material of the Oldham link 23 is iron, the material of the key grooves formed in the upper bearing 21 and the orbiting scroll 4 may be aluminum. When the material of the Oldham link 23 is aluminum, the material of the key grooves formed in the upper bearing 21 and the orbiting scroll 4 may be iron.

### (Miscibility Characteristics with R290 Refrigerant)

The two-layer separation temperature was measured in accordance with the "Refrigerant Miscibility Test Method" of JIS K2211:2009 "Refrigerating Machine Oil".

First, the miscibility between the viscosity index improver alone and the refrigerant was confirmed. R290 was used as the refrigerant. As the viscosity index improver, a fluid obtained by diluting a polymethacrylate ester (PMA) with a diluent oil was used. The blending of the PMA and the diluent oil is as shown in Nos. 1 to 3 (Sanyo Chemical Industries, Ltd.) of Table 1. The PMA has a structural unit represented by Formula (I) and has an alkyl substituent having 1 to 18 carbon atoms.

**[Table 1]**

| | Viscosity Index Improver | | |
|---|---|---|---|
| | No. 1 | No. 2 | No. 3 |
| PMA content (wt%) | 70 | 20 | 60 |
| Diluent oil content (wt%) | 30 | 80 | 40 |
| Type of diluent oil | Mineral oil | Ester oil | Mineral oil |
| Viscosity index | 189 | N.D. | 210 |
| Kinematic viscosity at 100°C (mm²/s) | 260 | 1500 | 490 |

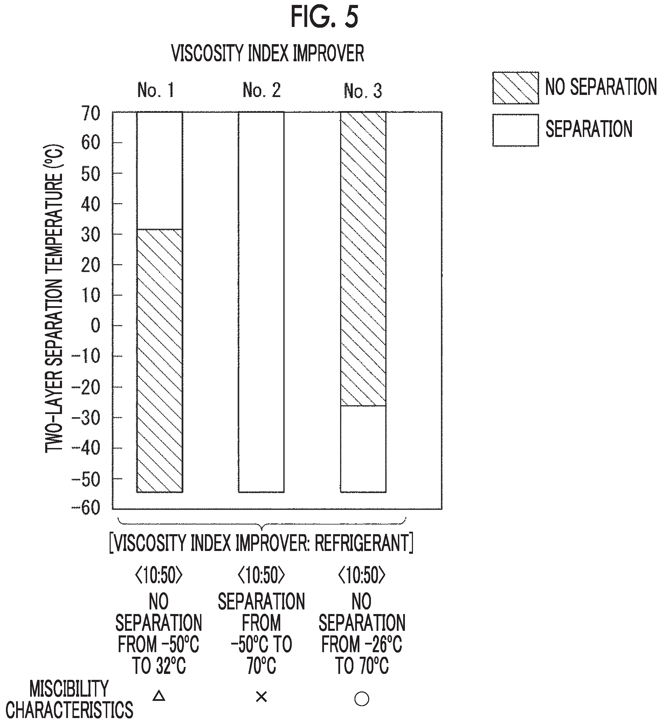

FIG. 5 shows the evaluation results of the viscosity index improver. The figure shows the two-layer separation temperature of a mixture obtained by mixing the viscosity index improver and the refrigerant at a weight ratio of 10:50.

The viscosity index improver No. 2 was separated from the R290 refrigerant in the entire region. On the other hand, No. 1 was not separated in a temperature range of 32°C or lower. No. 3 was not separated in a temperature range of -26°C or higher. In the compressor of the refrigerating device, the discharge temperature rises to 120°C. Therefore, it is required that the viscosity index improver is not separated on the high temperature side. On the low temperature side, it is sufficient that separation does not occur at an ambient temperature. From this, in a case of being used in the compressor of the refrigerating device, the viscosity index improver of No. 3 is suitable.

Next, the miscibility between the refrigerating machine oil containing the viscosity index improver and the refrigerant was confirmed. No. 3 described in Table 1 was used as the viscosity index improver. A polyol ester (viscosity grade ISO VG32) was used as the base oil. The concentration of the viscosity index improver in the refrigerating machine oil was set to 5 wt%.

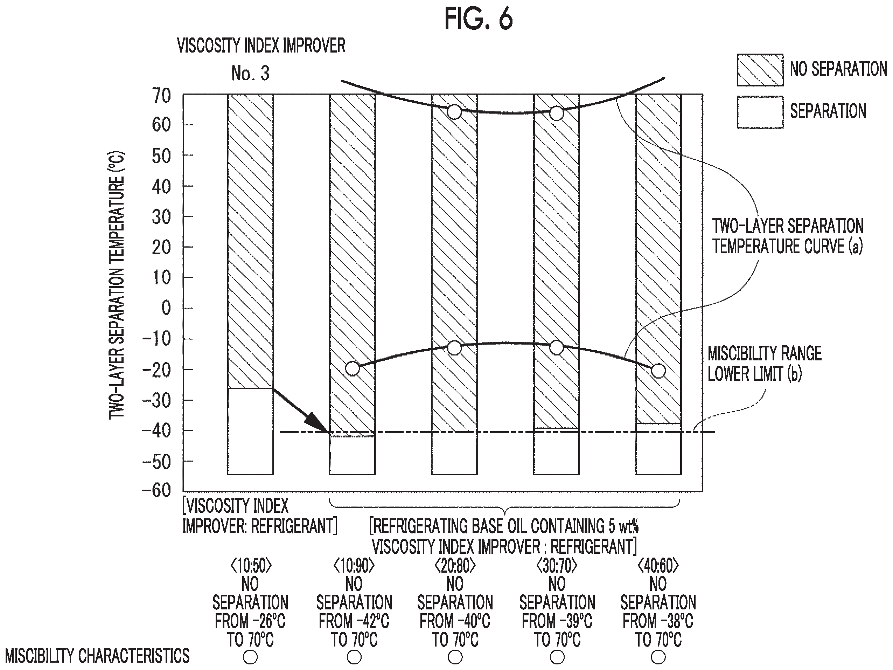

FIG. 6 shows the two-layer separation temperature of the mixture of the refrigerating machine oil containing the viscosity index improver and the refrigerant. In the leftmost part in FIG. 6, the results of No. 3 in FIG. 5 are displayed side by side as a reference. In the mixture in FIG. 6, refrigerating machine oil (containing viscosity index improver No. 3):refrigerant is 10:90 to 40:60 (weight ratio). In FIG. 6, the curve shown superimposed on the bar graph is obtained by inserting the two-layer separation temperature curve (a) of a mixture of VG32 polyol ester (VG32_POE), which is used in conventional refrigerating machine oils, and R410. In FIG. 6, the dashed double-dotted line shown below the bar graph indicates a miscibility range lower limit (b) of a mixture of VG46 polyol ester (VG46_POE), which is used in conventional refrigerating machine oils, and R290. VG32_POE is a refrigerating machine oil for R410A or the like. VG46_POE is a candidate refrigerating machine oil for propane.

The miscibility characteristics between the refrigerating machine oil containing viscosity index improver No. 3 and the refrigerant were good. In the refrigerating machine oil containing viscosity index improver No. 3, the miscibility range lower limit (the two-layer separation temperature on the low temperature side) was widened by about 10 to 15°C as compared with a case where No. 3 was mixed with the R290 refrigerant alone. It is expected that the miscibility range tends to narrow as the concentration of the viscosity index improver increases. The mixing ratio between the refrigerating machine oil and the refrigerant hardly affected the two-layer separation temperature.

It was confirmed that the mixture of the refrigerating machine oil containing viscosity index improver No. 3 and the R290 refrigerant had a wider miscibility range (see the two-layer separation temperature curve (a) in FIG. 6) and could maintain the same miscibility characteristics as those of the mixture of the refrigerating machine oil and the refrigerant used in the refrigerating device in the related art (see the miscibility range lower limit (b) in FIG. 6). From the above, it was confirmed that the mixture of the refrigerating machine oil containing viscosity index improver No. 3 and the R290 refrigerant can be used in the operating temperature range of the conventional refrigerating device.

### (Concentration of Viscosity Index Improver)

For the refrigerating machine oil containing the viscosity index improver in the ester-based base oil having different viscosity grades, the kinematic viscosities at 40°C and 100°C were measured, and the viscosity index (VI) was calculated from the results.

Table 2 shows the test conditions and the results. For reference, Table 2 shows the acid value, the kinematic viscosity, and the viscosity index (VI) of the base oil having different viscosity grades. No. 3 in Table 1 was used as the viscosity index improver. The refrigerating machine oil of Sample Nos. 3 to 6 contained tributyl phosphate (TBP) as the antiwear agent.

**[Table 2]**

| Sample No. | Base oil viscosity grade | Antiwear agent | PMA (viscosity index improver) | Acid value (mg-KOH/g) | Kinematic viscosity (mm²/s) | | Viscosity index (VI) |
|---|---|---|---|---|---|---|---|
| | | | | | 40°C | 100°C | |
| 1 | ISO VG22 | - | - | (0.03) | (-21.5) | (-4.93) | (-163) |
| 2 | ISO VG32 | 1 wt% | - | 0.02 (0.03) | 30.21 (31.2) | 6.57 (6.71) | 182 (180) |
| 3 | | | 0.6 wt% (1 wt%) | 0.02 | 31.39 | 6.84 | 186 |
| 4 | | | 3 wt% (5 wt%) | 0.02 | 36.42 | 7.92 | 198 |
| 5 | | | 6 wt% (10 wt%) | 0.02 | 43.45 | 9.35 | 206 |
| 6 | | | 12 wt% (20 wt%) | 0.02 | 60.27 | 12.53 | 212 |
| 7 | ISO VG46 | - | - | (0.03) | (49.5) | (9.24) | (189) |
| 8 | ISO VG46 | - | - | (0.01 or less) | (49.3) | (9.83) | (190) |

| | | | | | | | |
|---|---|---|---|---|---|---|---|
| *Values in parentheses are those without addition of the antiwear agent (TBP). | | | | | | | |

The viscosity index improver (No. 3 in Table 1) did not inhibit the characteristics of the refrigerating machine oil even when added to the ester base oil.

The base oil (Sample Nos. 1, 2, 7, and 8) to which the viscosity index improver was not added showed a higher viscosity index as the viscosity grade was higher. By adding the viscosity index improver to the base oil having a viscosity grade of ISO VG32, the viscosity index of the refrigerating machine oil was improved. As the concentration of the viscosity index improver increased, the viscosity index also increased. By adding 5 wt% (3 wt% of PMA) of the viscosity index improver, the viscosity index was increased by about 10% relative to that of the base oil before the addition. This was a value about 5% higher than the viscosity index of ISO VG46.

As the concentration of the viscosity index improver increased, the kinematic viscosities at 40°C and 100°C increased. In sample No. 5 in which the concentration of the viscosity index improver was 10 wt% (6 wt% of PMA), the kinematic viscosities at 40°C and 100°C were values close to ISO VG46 even though the base oil having a viscosity grade of ISO VG32 was used. The kinematic viscosity at 40°C was lower than that of the base oil having a viscosity grade of ISO VG46 as long as the concentration of the viscosity index improver was 10 wt% (6 wt% of PMA).

According to the above results, by containing the viscosity index improver, the viscosity index of the refrigerating machine oil using the base oil having a viscosity grade of ISO VG32 could be made equal to or higher than that of ISO VG46. The refrigerating machine oil (sample No. 5) containing the viscosity index improver at 10 wt% (6 wt% of PMA) or less could be started with a kinematic viscosity lower than that of ISO VG46, and exhibited a kinematic viscosity equivalent to that of ISO VG46 during operation. In the refrigerating machine oil (sample No. 4) containing the viscosity index improver at 5 wt% (3 wt% of PMA), the refrigerating machine oil could be started with a kinematic viscosity about 25% lower than that of ISO VG46, and could be operated with a kinematic viscosity about 20% higher than that before the addition of the viscosity index improver.

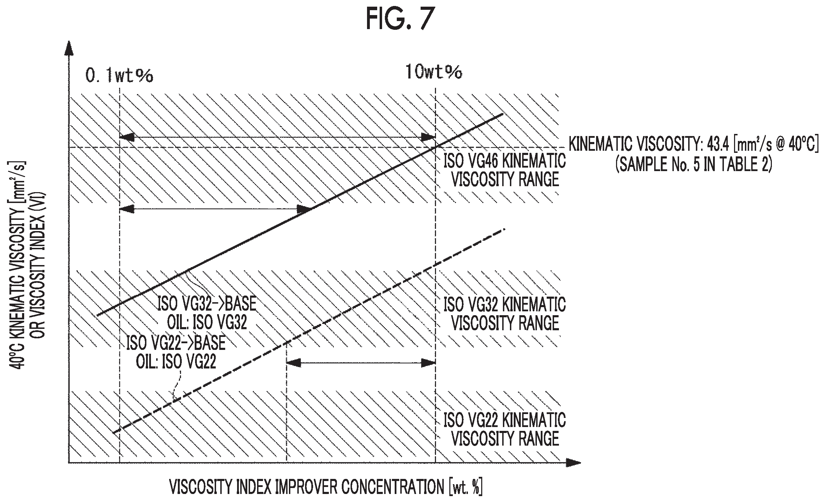

FIG. 7 shows a graph summarizing the influence of the viscosity index improver on the base oil. In FIG. 7, the horizontal axis is the concentration (wt%) of the viscosity index improver, and the vertical axis is the kinematic viscosity (mm²/s) at 40°C or the viscosity index (VI). The concentration of the viscosity index improver in FIG. 7 assumes the use of the viscosity index improver of No. 3 in Table 1.

As the concentration of the viscosity index improver increases, the kinematic viscosity and the viscosity index at 40°C are improved substantially linearly. When the concentration of the viscosity index improver is 10 wt% or less (6 wt% of PMA), the kinematic viscosity at the low temperature side (40°C) does not become excessively large. When the viscosity grade of the base oil is ISO VG32, by setting the concentration of the viscosity index improver to 1 to 5 wt% (0.6 to 3 wt% of PMA), the kinematic viscosity at 40°C can be reliably made lower than that of ISO VG46. When the viscosity grade of the base oil is ISO VG22, even when the concentration of the viscosity index improver is set to 5 to 10 wt% (3 to 6 wt% of PMA), the kinematic viscosity at 40°C can be made lower than that of ISO VG46.

### <Supplementary Notes>

The refrigerating machine oil and the refrigerating device described in the above-described embodiment are understood as follows, for example.

A refrigerating machine oil according to a first aspect of the present disclosure is a refrigerating machine oil for a refrigerating device charged with propane as a refrigerant, the refrigerating machine oil including: an ester-based base oil having a viscosity grade of ISO VG32 or less; and a viscosity index improver containing a polymethacrylate having an alkyl substituent having 1 to 18 carbon atoms, in which a concentration of the polymethacrylate is 0.6 wt% or more and 6 wt% or less.

According to the present disclosure, the viscosity index can be improved by containing the above-described polymethacrylate in the ester-based base oil. As a result, even when a base oil having a low viscosity grade is used, the kinematic viscosity in a high temperature range can be maintained. By using a base oil having a low viscosity grade, the frictional resistance at normal temperature can be reduced. Since the kinematic viscosity can be maintained in a high temperature range, the oil film load-carrying capacity during operation (high temperature) is improved as compared with a base oil to which the polymethacrylate ester is not added.

In a case where the ester-based base oil having a viscosity grade of ISO VG32 is used, the concentration of the polymethacrylate may be 0.6 wt% or more and 3 wt% or less. As a result, the kinematic viscosity at the time of start-up can be made lower than that of a base oil having a viscosity grade of ISO VG46, and the kinematic viscosity equal to or higher than that of ISO VG46 can be secured during operation.

In the refrigerating machine oil according to a second aspect of the present disclosure, in the first aspect, the refrigerating machine oil may further include tributyl phosphate as an antiwear agent, in which a concentration of the antiwear agent is 1 wt% or more and 5 wt% or less.

When the TBP is contained in an amount of 1 wt% or more, the wear resistance of the refrigerating machine oil is significantly improved.

A refrigerating device according to a third aspect of the present disclosure is a refrigerating device including a refrigerant circulation circuit in which a compressor (1), a condenser (12), an expansion valve (13), and an evaporator (14) are connected by main piping (15a to 15d) to circulate a refrigerant, in which the compressor includes a refrigerating machine oil supply mechanism (26, 54, 53) that supplies a refrigerating machine oil to a sliding part (24, 21, 52, 4, 23), the refrigerating machine oil accommodated in the refrigerating machine oil supply mechanism includes an ester-based base oil having a viscosity grade of ISO VG32 or less and a viscosity index improver containing a polymethacrylate having an alkyl substituent having 1 to 18 carbon atoms, and a concentration of the polymethacrylate is 0.6 wt% or more and 6 wt% or less, and the refrigerant circulation circuit is charged with propane as the refrigerant.

In the refrigerating device according to a fourth aspect of the present disclosure, in the third aspect, a charge amount of the refrigerant is 300 g or more.

In the refrigerating device according to a fifth aspect of the present disclosure, in the third aspect or the fourth aspect, the compressor is a scroll compressor including an Oldham link (23) as an anti-rotation mechanism.

### Reference Signs List

1: compressor (scroll compressor, scroll fluid machine)
2: housing
3: fixed scroll
4: orbiting scroll
12: condenser
13: expansion valve
14: evaporator
15a, 15b, 15c, 15d: pipe
21: upper bearing
21A: key groove
23: Oldham link
23A: key
23B: key
24: lower bearing
26: storage region
27: crank pin
28: suction pipe
29: discharge pipe
31: end plate
32, 38: discharge port
32A: multiport
33: wall body
35: retainer
36: reed valve
37: discharge cover
37A: retainer
37B: reed valve
41: end plate
43: wall body
52: drive bearing
R1: compression space

## Claims

1. A refrigerating machine oil for a refrigerating device charged with propane as a refrigerant, the refrigerating machine oil comprising:
an ester-based base oil having a viscosity grade of ISO VG32 or less; and
a viscosity index improver containing a polymethacrylate having an alkyl substituent having 1 to 18 carbon atoms,
wherein a concentration of the polymethacrylate is 0.6 wt% or more and 6 wt% or less.

2. The refrigerating machine oil according to Claim 1, further comprising tributyl phosphate as an antiwear agent,
wherein a concentration of the antiwear agent is 1 wt% or more and 5 wt% or less.

3. A refrigerating device comprising a refrigerant circulation circuit in which a compressor, a condenser, an expansion valve, and an evaporator are connected by main piping to circulate a refrigerant,
wherein the compressor includes a refrigerating machine oil supply mechanism that supplies a refrigerating machine oil to a sliding part,
the refrigerating machine oil accommodated in the refrigerating machine oil supply mechanism includes an ester-based base oil having a viscosity grade of ISO VG32 or less and a viscosity index improver containing a polymethacrylate having an alkyl substituent having 1 to 18 carbon atoms, and a concentration of the polymethacrylate is 0.6 wt% or more and 6 wt% or less, and
the refrigerant circulation circuit is charged with propane as the refrigerant.

4. The refrigerating device according to Claim 3, wherein a charge amount of the refrigerant is 300 g or more.

5. The refrigerating device according to Claim 3, wherein the compressor is a scroll compressor including an Oldham link as an anti-rotation mechanism.
